# EUROPÄISCHE PATENTANMELDUNG

(11) **EP 3 258 431 A1**
(43) Veröffentlichungstag der Anmeldung: **20.12.2017**
(21) Anmeldenummer: 17156578.1
(22) Anmeldetag: 17.02.2017
(51) Int. Cl.: G06Q 10/06, G06Q 50/02, G06Q 10/10, G07C 5/00, G06F 11/34

(54) **VERFAHREN ZUR ZUSTANDSAKQUISITION EINER LANDWIRTSCHAFTLICHEN ARBEITSEINHEIT**

(30) Priorität: 13.06.2016 DE 102016110798
(71) Anmelder: 365FarmNet Group GmbH & Co. KG, DE-10117 Berlin (DE)
(72) Erfinder: Enderle, Michael, 12249 Berlin (DE); Apke, Christoph, 33659 Bielefeld (DE)
(74) Vertreter: Budach, Steffen

(57) **Zusammenfassung**

Die vorliegende Erfindung betrifft ein Verfahren zur Zustandsakquisition zumindest einer landwirtschaftlichen Arbeitseinheit (1, 2, 3, 6, 7, 8) umfassend die Verfahrensschritte:
- Bereitstellen von Positionsdaten;
- Bereitstellen von Zustandsdaten der zumindest einen Arbeitseinheit (1, 2, 3, 6, 7, 8);
welches dadurch gekennzeichnet ist, dass
- die Zustandsdaten an ein mobiles Datenverarbeitungsgerät (4) übertragen werden, von welchem die Zustandsdaten während eines Aufzeichnungsmodus aufgezeichnet werden;
- wobei eine jeweilige Aktivierung des Aufzeichnungsmodus erfasst und im Kontext mit den während des Aufzeichnungsmodus bereitgestellten Positionsdaten und/oder Zustandsdaten gewertet wird; und
- die Wertung einem das mobile Datenverarbeitungsgerät (4) einer Bedienperson repräsentierenden Datensatz zugeordnet wird.

## Beschreibung

Die vorliegende Erfindung betrifft ein Verfahren zur Zustandsakquisition zumindest einer landwirtschaftlichen Arbeitseinheit gemäß dem Oberbegriff des Anspruches 1, ein Computerprogramm gemäß Anspruch 10 sowie ein System zur Zustandsakquisition zumindest einer landwirtschaftlichen Arbeitseinheit gemäß dem Oberbegriff des Anspruches 11.

Im Rahmen der Bewirtschaftung landwirtschaftlich genutzter Flächen kommen zunehmend rechnergestützte Verwaltungssysteme zur Anwendung, welche dazu eingerichtet sind, im Zuge dieser Bewirtschaftung erforderliche Betriebsabläufe beziehungsweise Betriebsprozesse zu organisieren, aufeinander abzustimmen und zu verwalten. Für eine Optimierung der Abläufe von Betriebsprozessen ist es unter anderem erforderlich, Kenntnis hinsichtlich des jeweiligen aktuellen Standortes sowie der aktuellen Aktivität einer jeden landwirtschaftlichen Arbeitseinheit zu haben, welche im Verlauf der Bewirtschaftung zum Einsatz kommen kann. Dabei unterscheiden sich die auf einer zu bewirtschaftenden Fläche zum Einsatz kommenden Arbeitseinheiten in Abhängigkeit von der jeweiligen zu erfüllenden Aufgabenstellung, beispielsweise dem Pflügen, Säen, Spritzen, Ernten, Transportieren von Erntegut, um nur eine kleine Auswahl zu nennen. Hierfür werden Positionsdaten und Zustandsdaten der jeweiligen Arbeitseinheit bereitgestellt. Die Zustandsdaten werden gemeinsam mit den Positionsdaten dem Verwaltungssystem zur Verfügung gestellt, welches diese Daten auswertet. Unter Zustandsdaten werden Betriebs- und Ernteparamter verstanden, welche während des Aufenthaltes auf einer landwirtschaftlich genutzten Fläche durch die Arbeitseinheit bestimmbar sind, aus denen eine Aktivität der Arbeitseinheit ermittelbar ist. Unter dem allgemeinen Begriff landwirtschaftliche Arbeitseinheit sind alle Vorrichtungen zusammengefasst, welche im Zuge einer Bearbeitung einer landwirtschaftlich genutzten Fläche zum Einsatz kommen können. Dabei kann es sich beispielsweise um selbstfahrende Erntemaschinen, wie Mähdrescher oder Feldhäcksler, sowie an diese anbringbare Vorsatzgeräte, wie Getreideschneidwerk, Maispflücker, Maisgebiss, um Traktoren und deren front- und heckseitig anbringbaren Anbaugeräte sowie gezogene Vorrichtungen wie Ladewagen, Transportwagen oder dergleichen handeln. Neben den bereitgestellten Zustandsdaten der jeweiligen Arbeitseinheit bedarf es, wie bereits ausgeführt, auch der Kenntnis der aktuellen Position der Arbeitseinheit, welche im Allgemeinen mittels eines globalen satellitengestützen Positionsortungssystems bestimmt wird. Die Positionsbestimmung kann mittels eines mobilen Datenverarbeitungsgerätes einer die Arbeitseinheit oder Arbeitseinheiten handhabenden Bedienperson erfolgen, welches zum Empfang entsprechender Signale des Positionsortungssystems eingerichtet ist.

So ist es aus der WO2015/034887 A1 bekannt, einen dezentralen Rechner vorzusehen, welcher als Webserver und Datenbankserver fungiert. Von der von dem Rechner bereitgestellten Webseite sind Daten einer oder mehrerer Datenquellen des globalen satellitengestützen Positionsortungssystems in Abhängigkeit von dem Standort der Arbeitseinheit abrufbar. Die hierfür erforderliche Positionsbestimmung erfolgt mittels eines mobilen Datenverarbeitungsgerätes, wie beispielsweise einem Smartphone oder einem Tabletcomputer oder dergleichen, welches von einer Bedienperson der Arbeitseinheit mitgeführt wird. Das mobile Datenverarbeitungsgerät ist auch zur Ausführung einer Anwendung eingerichtet, die den Zugriff auf die auf dem dezentralen Rechner gehostete Webseite ermöglicht. Die Kommunikation zwischen dem mobilen Datenverarbeitungsgerät und dem dezentralen Rechner erfolgt dabei durch das Internet. Eine Voraussetzung für diese Funktion ist die Aktivierung des Signalempfangs des mobilen Datenverarbeitungsgerätes zur Bestimmung der Position der Arbeitseinheit mittels des Positionsortungssystems. Die Aktivierung des Signalempfangs zur Positionsbestimmung, des so genannten Tracking, durch eine Bedienperson, ist jedoch nicht bei jeder Aktivität einer Arbeitseinheit gegeben. Gründe hierfür können sein, dass die Aktivierung vor der Durchführung einer Aktivität übersehen wurde, denkbar ist aber auch eine bewusste Ablehnung der Aktivierung.

Es ist die Aufgabe der Erfindung, ein Verfahren beziehungsweise ein System vorzustellen, mittels dessen eine Beeinflussung einer Bedienperson hinsichtlich der Akzeptanz der Nutzung der Positionserfassung und Zustandsdatenerfassung durch das mobile Datenverarbeitungsgerät erreicht wird.

Diese Aufgabe wird erfindungsgemäß durch ein Verfahren gemäß dem Anspruch 1 gelöst.

Bezogen auf ein Computerprogramm wird die Aufgabe durch den Gegenstand des Anspruches 10 gelöst.

Weiterhin wird diese Aufgabe durch ein System gemäß dem Anspruch 11 gelöst.

Die vorliegende Erfindung wird nachstehend anhand von in den Zeichnungen dargestellten Ausführungsbeispielen näher erläutert.

Vorteilhafte Weiterbildungen sind Gegenstand der Unteransprüche.

Gemäß dem Anspruch 1 wird ein Verfahren zur Zustandsakquisition zumindest einer landwirtschaftlichen Arbeitseinheit vorgeschlagen, welches die Verfahrensschritte des Bereitstellens von Positionsdaten, des Bereitstellens von Zustandswerten der zumindest einen Arbeitseinheit sowie die Erzeugung von Zustandsdaten aus den bereitgestellten Zustandswerten der Arbeitseinheit umfasst und dadurch gekennzeichnet ist, dass die Zustandsdaten an ein mobiles Datenverarbeitungsgerät übertragen werden, von welchem die Zustandsdaten während eines Aufzeichnungsmodus aufgezeichnet werden, wobei eine jeweilige Aktivierung des Aufzeichnungsmodus erfasst und im Kontext mit den während des Aufzeichnungsmodus bereitgestellten Positionsdaten, Zustandswerten und/oder Zustandsdaten gewertet wird und dass die Wertung einem das mobile Datenverarbeitungsgerät einer Bedienperson repräsentierenden Datensatz zugeordnet wird. Das Verfahren bietet die Möglichkeit, eine Bedienperson mittels einer Belohnungsfunktion zu motivieren, den Aufzeichnungsmodus und damit verbunden die Funktionen des Tracking und der Zustandsdatenerfassung mittels des mobilen Datenverarbeitungsgerätes zu aktivieren. Es soll ein Anreiz geschaffen werden, durch das Sammeln und Auswerten von Aktivitätsdaten der zumindest einen Arbeitseinheit und/oder einer diese betätigende Bedienperson aktiv zu einer Auswertung und Optimierung von Betriebsprozessen beizutragen.

Hierzu können die Zustandsdaten durch das mobile Datenverarbeitungsgerät automatisch erfasst oder mittels einer Eingabevorrichtung manuell in das mobile Datenverarbeitungsgerät eingegeben werden. Für eine automatische Erfassung von Zustandsdaten können den Arbeitseinheiten aktive Sender zugeordnet sein, durch welche mittels drahtloser Datenübertragung Informationen an das mobile Datenverarbeitungsgerät gesendet werden. Die gesendeten Informationen umfassen dabei Daten über die jeweilige Arbeitseinheit und ihre Funktion an sich. So lässt sich beispielsweise erkennen, ob eine als Traktor ausgebildete Arbeitseinheit mit einer weiteren, beispielsweise als Sämaschine ausgebildeten Arbeitseinheit gekoppelt wird. Aus dieser Information kann eine nachfolgende Aktivität der beiden Arbeitseinheiten abgeleitet werden. Mittels der Positionserfassung kann diese nachfolgende Aktivität verifiziert werden. Das heißt mit dem Erreichen einer zu bearbeitenden landwirtschaftlich genutzten Fläche, eines kartographierten Schlages, durch die Arbeitseinheiten beziehungsweise dem Befahren des Schlages werden diese als zu wertende Aktivitäten erkannt und entsprechend gewertet. Diese Wertung wird dem korrespondierenden Datensatz des mobilen Datenverarbeitungsgerätes respektive der Bedienperson zugeordnet.

Ebenfalls automatisch erfasst werden können das Starten und Stoppen der Arbeitszeiterfassung. Weiterhin können Aufenthaltsorte der zumindest einen Arbeitseinheit automatisch erfasst werden, wenn sich die Arbeitseinheit in der unmittelbaren Nähe von Orten befindet, die für den Betriebsablauf relevant sind. Als relevante Orte kommen beispielsweise die Waage, ein Schlag, ein Silo oder ein Stall in Betracht. Ob ein relevanter Ort von der Arbeitseinheit erreicht wurde, lässt sich ebenfalls anhand der von dem mobilen Datenverarbeitungsgerät empfangenen Positionsdaten oder durch aktive Sender, die von dem mobilen Datenverarbeitungsgerät empfangbare Signale aussenden, an den relevanten Orten bestimmen. Die Positionsdaten respektive Signale derartiger relevanter Orte können in einer Speichereinheit des mobilen Datenverarbeitungsgerätes hinterlegt sein, so dass ein Abgleich zwischen den empfangenen Positionsdaten oder Signalen und den hinterlegten Positionsdaten möglich ist. Alternativ können die von dem mobilen Datenverarbeitungsgerät empfangenen Positionsdaten und Zustandsdaten an eine durch ein Kommunikationsmedium wie das Internet angebundene Datenverarbeitungseinrichtung zur Auswertung und Verarbeitung übertragen werden.

Alternativ können Zustandsdaten, die aufgrund ihrer Natur nicht sensorisch erfassbar sind, manuell eingegeben werden. Zu diesen Zustandsdaten, die sensorisch nicht ohne weiteres erfassbar sind, zählen beispielsweise Aktivitäten der Bedienperson, die in unmittelbarem Zusammenhang mit der Arbeitseinheit stehen. Dazu können durch die Bedienperson durchführbare Reinigungs-, Wartungs- und/oder Instandhaltungstätigkeiten an der Arbeitseinheit zählen. Darüber hinaus können auch Tätigkeiten manuell erfasst werden, die vordefiniert werden und in dem mobilen Datenverarbeitungsgerät auswählbar hinterlegt sind, wie beispielsweise das Fegen der Hofstätte, das Melden von Hindernissen auf dem Weg zu einem Schlag oder der Hofstätte oder das Auffinden von Steinen auf einem zu bearbeitenden Schlag während der Aussaat. Die manuelle Erfassung von Zustandsdaten ermöglicht es einer Bedienperson auch während betriebsbedingter Unterbrechungen, ihre damit verbundenen Aktivitäten erfassen zu können. Hierzu kann die Eingabevorrichtung Bestandteil des mobilen Datenverarbeitungsgerätes sein, beispielsweise ein Touch-Screen, oder eine mit dem mobilen Datenverarbeitungsgerät verbindbare Eingabe-Ausgabeeinheit. Der Bedienperson kann somit die Möglichkeit eingeräumt werden, aus einer Vielzahl von möglichen manuell zu erfassenden Tätigkeiten beziehungsweise Aktivitäten auszuwählen. Zur Hinterlegung dieser manuell auswählbaren Zustandsdaten beziehungsweise Aktivitäten sind diese in der Gestalt einer Datenbank aufbereitet und in dem mobilen Datenverarbeitungsgerät hinterlegt. In Abhängigkeit von ihrem Nutzen können diese manuell erfassbaren Zustandsdaten beziehungsweise Aktivitäten individuell gewichtet bewertet werden.

Insbesondere kann der Aufzeichnungsmodus durch die manuelle Eingabe zumindest eines Zustandsdaten repräsentierenden Wertes aktiviert werden. Hierzu zählen im einfachsten Fall das Aktivieren der Erfassung von Positionsdaten (des Tracking) oder das Starten der Arbeitszeiterfassung.

Vorzugsweise kann in Abhängigkeit von den bereitgestellten Zustandsdaten eine erfolgte Aktivierung des Aufzeichnungsmodus unterschiedlich gewichtet und erfasst werden. So kann mittels des der zumindest einen Arbeitseinheit zugeordneten aktiven Senders festgestellt werden, dass eine Bedienperson mit dem mobilen Datenverarbeitungsgerät und aktiviertem Aufzeichnungsmodus die Arbeitseinheit betreten oder verlassen hat respektive sich mit dem mobilen Datenverarbeitungsgerät im Sendebereich der den Arbeitseinheiten zugeordneten Sendern aufhält. Dabei kann unterschieden werden ob es sich um eine singuläre Arbeitseinheit handelt oder ob es sich um eine Kombination von wenigstens zwei Arbeitseinheiten handelt, die von einer Bedienperson betreten oder verlassen beziehungsweise gehandhabt werden.

Weiterhin können nach einer erfolgten Aktivierung des Aufzeichnungsmodus bereitgestellte Zustandsdaten unterschiedlich gewichtet und erfasst werden. Die verschiedenen Aktivitäten können in Abhängigkeit von ihrer Bedeutung für das Durchführen unterschiedliche Gewichtungen erfahren, was einen weiteren Anreiz für die Aktivierung des Aufzeichnungsmodus schaffen soll. So kann beispielsweise das Einfahren in einen zu bearbeitenden Schlag mit nur einer Arbeitseinheit geringer gewichtet werden, als das Einfahren mit einer Kombination aus zwei Arbeitseinheiten. Diese unterschiedliche Gewichtung kann während des Befahrens respektive Bearbeitens des Schlages beibehalten werden. Weiterhin kann das Unterbrechen der Aktivität, wie das Anhalten der Arbeitseinheit auf dem Schlag, zu einer Herabsetzung der Gewichtung führen, während das erneute Starten der Aktivität zu einer Heraufsetzung der Gewichtung führen kann. Ebenso führt eine Verbindung oder Kopplung einer Arbeitseinheit mit einer zweiten Arbeitseinheit dazu, dass die Gewichtung der Aktivität erhöht wird und umgekehrt. Entsprechendes kann für manuell erfassbare Aktivitäten gelten, wobei in diesen Fällen eine entsprechende Gewichtung der einzelnen in dem mobile Datenverarbeitungsgerät hinterlegten, von einer Bedienperson auswählbaren Aktivitäten vordefiniert wird.

Vorteilhafterweise können die Anzahl der erfassten Aktivierungen des Aufzeichnungsmodus und die Anzahl der nach der Aktivierung des Aufzeichnungsmodus erfassten gewichteten Zustandsdaten aufgezeichnet werden. Mittels der bestimmten Anzahl lässt sich eine periodische Auswertung für jeden eine Bedienperson repräsentierenden Datensatz durchführen. Diese Auswertung kann für eine Beurteilung der jeweiligen Bedienperson im Rahmen einer Incentiveregelung herangezogen werden.

Insbesondere kann die aufgezeichnete Anzahl zur Bewertung von der Arbeitseinheit durchgeführter Betriebsprozesse verwendet werden. Hieraus können Informationen gewonnen werden, die zu einer Verbesserung des Verfahrens heranziehbar sind.

Vorteilhaft ist es, wenn die erfasste Anzahl in einer Speichereinheit des mobilen Datenverarbeitungsgerätes abrufbar hinterlegt wird. Somit ist eine permanente Kommunikationsverbindung mit einer weiteren Datenverarbeitungsvorrichtung nicht erforderlich. Dies ist unter ökonomischen Gesichtspunkten effizienter und setzt keine bestehende Kommunikationsinfrastruktur, beispielsweise im Sinne eines Mobilfunknetzes, voraus.

Bevorzugt können die Zustandsdaten an eine externe Datenverarbeitungseinheit übertragen werden. So kann vorgesehen sein, dass mit der Rückkehr der zumindest einen Arbeitseinheit auf eine Hofstätte, auf der sich die zentrale Datenverarbeitungsvorrichtung befindet, ein Datenabgleich mittels der dort vorgesehenen Kommunikationsinfrastruktur zwischen der externen Datenverarbeitungseinheit und der zentralen Datenverarbeitungsvorrichtung, beispielsweise einem Hofrechner, durchgeführt werden.

Gemäß dem Anspruch 10 wird ein Computerprogramm mit Programmcode zur Durchführung aller Verfahrensschritte nach einem der Ansprüche 1 bis 9 vorgeschlagen, wenn das Computerprogramm in einem mobilen Datenverarbeitungsgerät ausgeführt wird.

Gemäß dem Anspruch 11 wird ein System zur Zustandsakquisition zumindest einer landwirtschaftlichen Arbeitseinheit, umfassend eine Vorrichtung zum Bereitstellen von Positionsdaten sowie Mittel zum Bereitstellen von Zustandsdaten der Arbeitseinheit, vorgeschlagen, welches dadurch gekennzeichnet ist, dass die Zustandsdaten an ein mobiles Datenverarbeitungsgerät übertragbar sind, welches dazu eingerichtet ist, die Zustandsdaten während eines Aufzeichnungsmodus aufzuzeichnen, wobei das mobile Datenverarbeitungsgerät dazu eingerichtet ist, eine jeweilige Aktivierung des Aufzeichnungsmodus zu erfassen und im Kontext mit den während des Aufzeichnungsmodus bereitgestellten Positionsdaten und/oder Zustandsdaten zu werten; und dass das mobile Datenverarbeitungsgerät dazu eingerichtet ist, die Wertung einem das mobile Datenverarbeitungsgerät einer Bedienperson repräsentierenden Datensatz zuzuordnen. Die Vorrichtung zum Bereitstellen von Positionsdaten kann als Empfänger zur Erfassung von Positionsdaten ausgebildet sein, die von einem satellitengestützen Positionserfassungssystem wie GPS oder dergleichen bereitgestellt werden. Das mobile Datenverarbeitungsgerät umfasst eine Prozessoreinheit, eine Speichereinheit, eine Anzeigeeinheit sowie einen Empfänger von Positionsdaten. Das mobile Datenverarbeitungsgerät ist dazu eingerichtet, das Computerprogramm mit Programmcode zur Durchführung aller Verfahrensschritte nach einem der Ansprüche 1 bis 9 auszuführen. Die von dem mobilen Datenverarbeitungsgerät gesammelten und gespeicherten Zustands- und Positionsdaten der landwirtschaftlichen Arbeitseinheit können im Nachgang ausgewertet werden. Durch Filterfunktionen ist eine Auswertung zum Beispiel hinsichtlich Aufenthaltszeiten der zumindest einen Arbeitseinheit an einem relevanten Ort, Nutzungszeiten der Arbeitseinheit, verwendete Transportwege und dergleichen mehr durchführbar. Diese Auswertung bietet Lohnunternehmen die Möglichkeit, Abrechnungen zu generieren während bei einem Einsatz durch ein landwirtschaftliches Unternehmen selbst Betriebsabläufe transparenter und besser händelbar werden. Optimierungspotentiale lassen sich einfacher ausmachen.

Die vorliegende Erfindung wird nachstehend anhand eines in den Zeichnungen dargestellten Ausführungsbeispieles näher erläutert.

Es zeigen:
- Fig. 1: eine schematische Darstellung von als Traktor und Ladewagen ausgeführten Arbeitseinheiten;
- Fig. 2: eine schematische Ansicht eines Systems zur Zustandsakquisition von Zustandsdaten wenigstens einer landwirtschaftlichen Arbeitseinheit;
- Fig. 3: eine schematische Darstellung eines mobilen Datenverarbeitungsgerätes;
- Fig. 4: ein Flussdiagramm zur Veranschaulichung eines Verfahrens zur Zustandsakquisition.

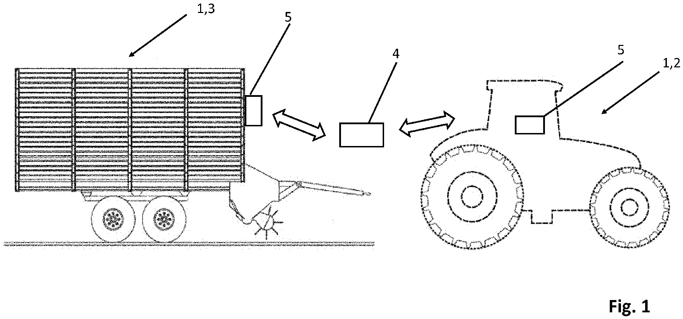

Die Darstellung in Fig. 1 zeigt eine schematische Darstellung von Arbeitseinheiten 1, welche mittels eines Verfahrens zur Zustandsakquisition überwacht werden, um diese hinsichtlich ihrer Betriebsprozessabläufe zu erfassen und zu optimieren. Als Arbeitseinheiten 1 sind beispielhaft dargestellt ein Traktor 2 sowie ein Ladewagen 3, welcher an den Traktor 2 ankoppelbar ist. Mit dem Bezugszeichen 4 ist ein mobiles Datenverarbeitungsgerät bezeichnet, welches anhand der

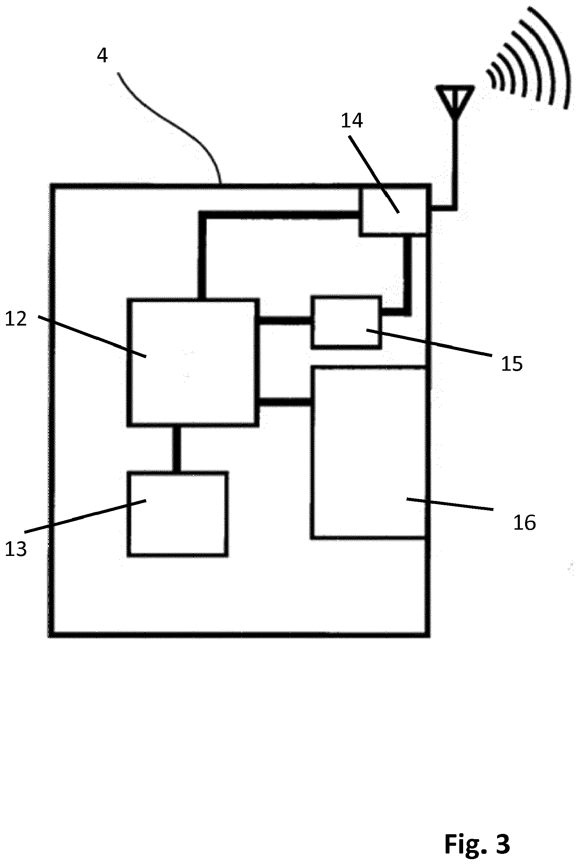

Darstellung in Fig. 3 näher erläutert wird. Sowohl der Traktor 2 als auch der Ladewagen 3 weisen jeweils einen aktiven Sender 5 auf, welcher in zeitlichen Intervallen Zustandsdaten aussendet. Die Datenübertragung des jeweiligen Senders 5 der Arbeitseinheit 1 basiert auf dem Bluetooth-Standard, insbesondere auf der als Bluetooth Low Energy (BLE) bezeichneten Funktechnik. Das mobile Datenverarbeitungsgerät 4 ist zu einem Empfang der von den Sendern 5 ausgesandten Zustandsdaten eingerichtet.

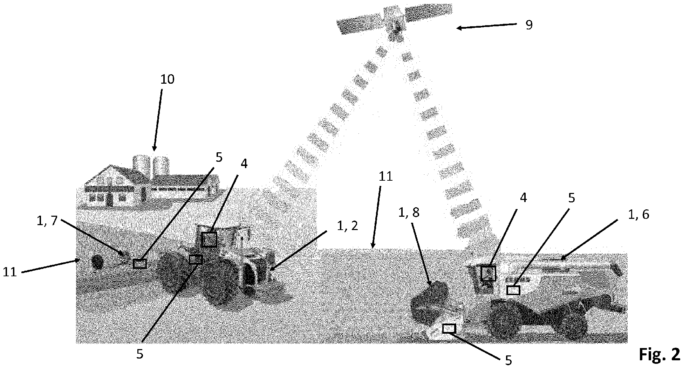

In Fig. 2 ist eine schematische Ansicht eines Systems zur Zustandsakquisition von Zustandsdaten wenigstens einer landwirtschaftlichen Arbeitseinheit 1 dargestellt. Dargestellt sind der Traktor 2 mit einer als Bodenbearbeitungsgerät 7 ausgeführten Arbeitseinheit 1, die am Dreipunktanbau des Traktors 2 angekoppelt ist. Der Traktor 2 bewegt sich auf einem zu bearbeitenden Schlag 11. Weiterhin ist eine als Mähdrescher 6 ausgeführte Arbeitseinheit 1 dargestellt. Der Mähdrescher 6 trägt an seinem Schrägförderer eine als Getreideschneidwerk 8 ausgebildete Arbeitseinheit 1. Der Mähdrescher 6 bearbeitet eine landwirtschaftliche Fläche 11. Jede der in Fig. 2 dargestellten Arbeitseinheiten 1 ist mit dem Sender 5 ausgestattet, um die Zustandsdaten der jeweiligen Arbeitseinheit 1 bereitstellen zu können. Die jeweilige Bedienperson des Traktors 2 beziehungsweise des Mähdreschers 6 führt das mobile Datenverarbeitungsgerät 4 mit sich, welches sich damit in der Reichweite der Sender 5 befindet. Weiterhin zeigt die Darstellung in Fig. 2 eine Hofstätte 10, zu welcher die Arbeitseinheiten 1 am Ende eines Arbeitstages zurückkehren. Mit dem Bezugszeichen 9 ist ein satellitengestütztes Ortungssystem bezeichnet, welches der Positionsbestimmung der jeweiligen Arbeitseinheit 1 mittels des mobilen Datenverarbeitungsgerätes 4 dient.

Unter zu akquirierenden Zustandsdaten werden beliebige gemessene, bestimmte oder berechnete Ist- oder Sollwerte verstanden, insbesondere gemessene physikalische Größen, geografische Positionen, Schaltzustände, laufende Zähler usw., aber auch nicht-physikalische Daten wie Namen, Seriennummern und Versionsnummern, Tätigkeitsbeschreibungen.

Die Darstellung in Fig. 3 zeigt eine schematische Darstellung des mobilen Datenverarbeitungsgerätes 4, um dessen Grundaufbau zu veranschaulichen. Das mobile Datenverarbeitungsgerät 4 umfasst eine Prozessoreinheit 12, zumindest eine Speichereinheit 13, eine Empfangseinheit 14 zum Empfang von Positionsortungssignalen, eine Bluetooth-Einheit 15 zum Senden und Empfangen von Funksignalen sowie eine Anzeigeeinheit 16. Die Anzeigeeinheit 16 ist vorzugsweise als Touchscreen ausgeführt, was die Eingabe und Ausgabe von Daten ermöglicht. Üblicherweise handelt es sich bei dem mobilen Datenverarbeitungsgerät 4 um ein Smartphone oder einen Tablet-PC, welche zur Ausführung von einem oder mehreren Computerprogrammen mit Programmcode respektive Anwendungen ausgebildet sind.

Von dem mobilen Datenverarbeitungsgerät wird ein Computerprogramm ausgeführt, welches der Erfassung und Aufzeichnung von Zustandsdaten dient. Die Zustandsdaten werden dabei mittels der Bluetooth-Einheit 15 von den Sendern 5 empfangen. Darüber hinaus lassen sich Zustandsdaten mittels der als Touchscreen ausgeführten Anzeigeeinheit 16 manuell eingeben. Vorteilhaft ist in der Speichereinheit 13 eine Datenbank hinterlegt, welche vordefinierte Zustandsdaten, wie Tätigkeitsbeschreibungen, enthält, die von der Bedienperson manuell auswählbar sind. Die von dem mobilen Datenverarbeitungsgerät 4 empfangenen oder manuell erfassten Zustandsdaten werden aufgezeichnet und in der Speichereinheit 13 abgelegt. Die in der Speichereinheit 13 abgelegten Zustandsdaten werden an eine externe Datenverarbeitungseinheit zur Analyse und Auswertung übertragen. Die Übertragung kann bei bestehender Kommunikationsverbindung mit der externen Datenverarbeitungseinheit, beispielsweise über das Internet, zeitnah erfolgen. Alternativ kann die Datenübertragung an die externe Datenverarbeitungseinheit zu einem späteren Zeitpunkt erfolgen, wenn die Hofstätte 10 von der Bedienperson respektive dem mobilen Datenverarbeitungsgerät wieder erreicht wurde.

Um eine Bedienperson zu der Nutzung des Computerprogrammes zu motivieren, ist ein Belohnungssystem in die Anwendung integriert. Die Bedienperson soll die Anwendung starten, damit die Zustandsdaten an das mobile Datenverarbeitungsgerät 4 übertragen werden, von welchem die Zustandsdaten während eines Aufzeichnungsmodus aufgezeichnet werden. Hierzu wird eine jeweilige Aktivierung des Aufzeichnungsmodus durch die Bedienperson erfasst und im Kontext mit den während des Aufzeichnungsmodus bereitgestellten Positionsdaten und/oder Zustandsdaten gewertet, und die Wertung einem das mobile Datenverarbeitungsgerät 4 einer Bedienperson repräsentierenden Datensatz zugeordnet. Die spätere Auswertung kann herangezogen werden, um die bewusste Nutzung des Computerprogrammes durch eine Gratifikation zu belohnen.

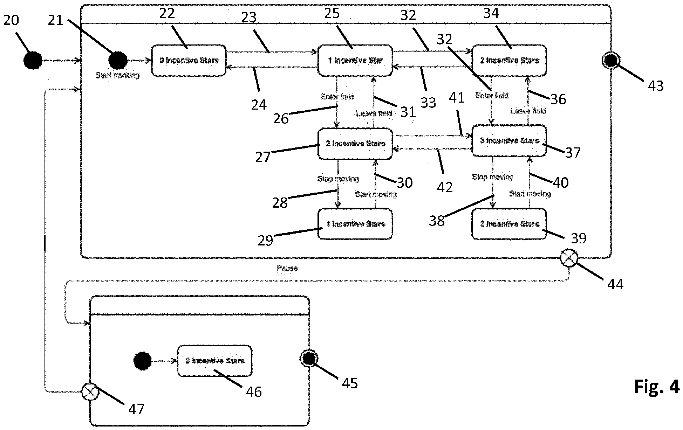

In Fig. 4 ist ein Flussdiagramm zur Veranschaulichung eines Verfahrens zur Zustandsakquisition und des damit verbundenen Anreizsystems dargestellt. Das Verfahren wird beispielhaft anhand der automatischen Erfassung von Zustandsdaten erläutert, die von den jeweiligen Sendern 5 einer Arbeitseinheit 1 oder mehrerer Arbeitseinheiten 1 bereitgestellt werden. Mit dem Bezugszeichen 20 ist ein Verfahrensschritt bezeichnet, der das Starten der Anwendung auf dem mobilen Datenverarbeitungsgerät 4 darstellt. Im Verfahrensschritt 21 erfolgt die Aktivierung des Trackings durch die Bedienperson, das heißt der Start der Erfassung von Zustands- und Positionsdaten während des Aufzeichnungsmodus.

Im Verfahrensschritt 22 findet eine erste Wertung statt, die auf das Aktivieren des Trackings im Verfahrensschritt 21 zurückzuführen ist. Wird in einem darauffolgenden Verfahrensschritt 23 eine Arbeitseinheit 1 erkannt, weil sich die Bedienperson mit dem mobilen Datenverarbeitungsgerät 4 dieser nähert beziehungsweise sich in eine Kabine der Arbeitseinheit 1 begibt, wird dies im Verfahrensschritt 25 positiv bewertet. Das Erkennen der Arbeitseinheit 1 erfolgt mittels des Empfangs der von dem Sender 5 der Arbeitseinheit 1 ausgesandten Zustandsdaten. Die Zustandsdaten enthalten Informationen über den Typ der Arbeitseinheit 1 sowie weitere Informationen, die eine Individualisierung der Arbeitseinheit 1 ermöglichen. Im umgekehrten Fall, das heißt beim Verlassen der Arbeitseinheit 1 durch die Bedienperson beziehungsweise dem Verbringen des mobilen Datenverarbeitungsgerätes außerhalb der Reichweite des Senders 5 wird auf den Verfahrensschritt 22 zurückgesprungen.

Bewegt die Bedienperson die Arbeitseinheit 1 auf eine zu bearbeitende Fläche, wie den Schlag 11, wird diese Aktivität anhand der Positionsbestimmung mittels des mobilen Datenverarbeitungsgerätes 4 im Verfahrensschritt 26 festgestellt. Diese Aktivität wird im Verfahrensschritt 27 bewertet. Dabei ist die Gewichtung im Verfahrensschritt 27 höher als im Verfahrensschritt 25, weil nun der eigentlichen Aufgabe, der Bearbeitung einer landwirtschaftlich genutzten Fläche, nachgekommen wird.

Wird im Verfahrensschritt 28 eine Unterbrechung der Bewegung der Arbeitseinheit 1 auf dem zu bearbeitenden Schlag 11 festgestellt, führt dies im Verfahrensschritt 29 zu einer weiteren Bewertung mit reduzierter Gewichtung. Dies soll dem Umstand Rechnung tragen, dass eine Unterbrechung einer Tätigkeit der Arbeitseinheit 1 während diese sich auf dem zu bearbeitenden Schlag 11 befindet, unterschiedliche Ursachen haben kann. Diese Ursachen und die mit ihrer Beseitigung verbundenen Aktivitäten durch die Bedienperson können ihrer Natur nach unter Umständen nicht sensorisch erfassbar sein. In solchen Fällen erfolgt eine Zustandsdatenerfassung manuell durch die Bedienperson, wie weiter oben bereits ausgeführt wurde.

Im Verfahrensschritt 30 wird die Wiederaufnahme der Bearbeitungsaktivität der Arbeitseinheit 1 festgestellt, was zu einem Rücksprung auf den Verfahrensschritt 27 führt. Dies geht mit einer entsprechend höheren Gewichtung der erfassten und aufgezeichneten Zustandsdaten einher. Am Ende einer Bearbeitung des Schlages 11 wird dieser verlassen, was im Verfahrensschritt 31 durch eine entsprechende Auswertung der Positionsdaten festgestellt wird. Das Verlassen des Schlages 11 führt zu einem Rücksprung auf den Verfahrensschritt 25 und damit einhergehend zu einer Reduzierung der Gewichtung der durch das mobile Datenverarbeitungsgerät 4 aufgezeichneten Tätigkeit.

Wird nach dem Verfahrensschritt 25 in einem darauffolgenden Verfahrensschritt 32 festgestellt, dass sich eine zweite Arbeitseinheit 1, beispielsweise der Ladewagen 3 gemäß Fig. 1, in unmittelbarer Nähe zum Traktor 2 befindet beziehungsweise an diesen angekoppelt wurde, wird in einem Verfahrensschritt 34 die Gewichtung der aufgezeichneten Aktivität gegenüber dem Verfahrensschritt 25 erhöht. Die Erkennung der weiteren Arbeitseinheit 1 erfolgt analog zu dem Erkennen der ersten Arbeitseinheit 1, dem Traktor 2, da auch der Ladewagen 3 mit dem zur Zustandsdatenübertragung vorgesehenen Sender 5 ausgestattet ist. Die mobile Datenverarbeitungseinheit 4 empfängt nun entsprechende Zustandsdaten von zwei Arbeitseinheiten1 und zeichnet diese auf. Ein entsprechender Verfahrensablauf stellt sich ein, wenn beispielsweise das auf einem Schneidwerkswagen befindliche Getreideschneidwerk 8 an den Mähdrescher 6 angehängt wird. Auch in diesem Fall empfängt das mobile Datenverarbeitungsgerät 4 Zustandsdaten zweier Arbeitseinheiten 1.

Im Verfahrensschritt 33 wird überprüft, ob die zweite Arbeitseinheit 1, wie der Ladewagen 3, von der ersten Arbeitseinheit 1, wie dem Traktor 2, getrennt wird. Wird ein Abkoppeln der zweiten Arbeitseinheit 1 von der ersten Arbeitseinheit 1 festgestellt, führt dies zu einem Rücksprung auf den Verfahrensschritt 25. Es werden nunmehr nur Zustandsdaten der einen Arbeitseinheit 1, wie dem Traktor 2, empfangen. Entsprechendes gilt für beliebige Kombinationen von Arbeitseinheiten 1.

Werden die beiden Arbeitseinheiten 1, Mähdrescher 6 und das auf dem angehängten Schneidwerkswagen befindliche Getreideschneidwerk 8 zu dem zu bearbeitenden Schlag 11 gefahren, so wird das Erreichen des Schlages 11 im Verfahrensschritt 35 anhand der Auswertung der von dem mobilen Datenverarbeitungsgerät empfangenen Positionsdaten erkannt. Im Verfahrensschritt 37 erfolgt eine Bewertung der Aktivitäten auf dem Schlag 11 mit einer gegenüber dem korrespondierenden Verfahrensschritt 27 erhöhten Gewichtung. Das Verlassen des Schlages 11 durch die beiden Arbeitseinheiten 1, den Mähdrescher 6 und das Getreideschneidwerk 8, wird im Verfahrensschritt 36 festgestellt. Dies führt entsprechend zu einem Rücksprung auf den Verfahrensschritt 34 und damit einhergehend zu einer Reduzierung der Gewichtung.

Im Verfahrensschritt 38 wird mittels der Positionsdatenauswertung festgestellt, ob die Arbeitseinheiten 1 ihre Bearbeitung des Schlages 11 unterbrochen haben. Dieser Verfahrensschritt 38 entspricht dem Verfahrensschritt 28. Wird festgestellt, dass beide Arbeitseinheiten 1, Mähdrescher 6 und Getreideschneidwerk 8 ihre Aktivitäten unterbrochen haben, so wird im darauffolgenden Verfahrensschritt 40 die weitere Bewertung von Aktivitäten mit reduzierter Gewichtung durchgeführt. Eine Wiederaufnahme der Bearbeitung des Schlages 11 wird im Verfahrensschritt 40 festgestellt und führt zum Rücksprung auf den Verfahrensschritt 37.

Im Verfahrensschritt 41 wird überwacht, ob an eine auf einem zu bearbeitenden Schlag 11 befindliche Arbeitseinheit 1 eine weitere Arbeitseinheit 1 angekoppelt wird, um gemeinsam mit dieser die Aktivitäten fortzusetzen. Dies kann zum Beispiel der Fall sein, wenn der Mähdrescher 6 den Schlag 11 erreicht und dort das zur Bearbeitung beziehungsweise zum Ernten von Erntegut bereits befindliche abgestellte Getreideschneidwerk 8 aufnimmt. Dies führt dazu, dass vom Verfahrensschritt 27 zum Verfahrensschritt 37 gesprungen wird. Umgekehrt wird im Verfahrensschritt 42 das Abkoppeln der zweiten Arbeitseinheit 1 von der ersten Arbeitseinheit 1 festgestellt, wie das Ablegen des Getreideschneidwerkes 8 auf den dafür vorgesehenen Schneidwerkswagen. Das Abkoppeln führt zu einem Rücksprung vom Verfahrensschritt 37 zum Verfahrensschritt 27, was mit einer geringeren Gewichtung der Bewertung der Aktivitäten der nunmehr nur einen Arbeitseinheit einhergeht.

Weiterhin sind ein Verfahrensschritt 43 beziehungsweise 45 vorgesehen, welche eine Beendigung der Anwendung durch die Bedienperson erlauben. Im Verfahrensschritt 44 ist eine temporäre Unterbrechung der Anwendung, das heißt der Trackingfunktion und der Aufzeichnung von Zustandsdaten der zumindest einen Arbeitseinheit 1, durch die Bedienperson möglich. Das Pausieren der Anwendung führt dazu, dass im Verfahrensschritt 46 die gewichtete Bewertung von Aktivitäten der zumindest einen Arbeitseinheit 1 für die Dauer der Unterbrechung auf Null gesetzt und der Aufzeichnungsmodus unterbrochen wird. Bei einer Wiederaufnahme der Trackingfunktion 21 und der Aufzeichnung von Zustandsdaten durch eine entsprechende Aktivierung durch die Bedienperson im Verfahrensschritt 47 wird zu dem Verfahrensschritt 21 oder dem im Zeitpunkt der temporären Unterbrechung aktiven Verfahrensschritt im Aufzeichnungsmodus gesprungen.

Neben der anhand des in Fig. 4 dargestellten Flussdiagrammes erläuterten Möglichkeit der automatisierten Erfassung von Zustandsdaten, besteht die bereits erwähnte Möglichkeit der manuellen Erfassung von Zustandsdaten oder Aktivitäten durch die Bedienperson, indem diese aus einer vorgebaren Liste von Zustandsdaten oder Aktivitäten auswählbar sind. Dies soll der Bedienperson die Möglichkeit geben, von ihr durchgeführte Tätigkeiten zu berücksichtigen, die nicht unmittelbar mit der Bearbeitung einer landwirtschaftlichen Fläche zu tun haben, jedoch für einen störungsfreien Ablauf des Betriebes erforderlich sind.

Um der Bedienperson die Möglichkeit zu geben, nachzuhalten, welche der von ihr durchgeführten Tätigkeit beziehungsweise Aktivitäten bewertet wurden und in welcher Größenordnung, lassen sich diese Daten aus der Speichereinheit 13 abrufen und auf der Anzeigeeinheit 16 des Datenverarbeitungsgerätes 4 darstellen.

Die von dem mobilen Datenverarbeitungsgerät 4 aufgezeichneten Positions- und Zustandsdaten und deren jeweilige Wertung werden einem das mobile Datenverarbeitungsgerät 4 einer Bedienperson repräsentierenden Datensatz zugeordnet. Bei der Übertragung der Zustands- und Positionsdaten an die externe Datenverarbeitungseinheit wird somit eine eindeutige Zuordnung zu dem jeweiligen mobilen Datenverarbeitungsgerät 4 sichergestellt. Bei der Analyse und Auswertung der Positions- und Zustandsdaten erfolgt somit auch eine eindeutige Zuordnung der durch die Bedienperson mittels der aktiven Nutzung der Anwendung gesammelten Bewertungspunkte, die als Anreiz für das Aktivieren der Trackingfunktion und des Aufzeichnungsmodus dienen.

Die durch die Verwendung eines Computerprogramms mit Programmcode zur Durchführung aller erfindungsgemäßen Verfahrensschritte zur manuellen und/oder automatischen Erfassung und Aufzeichnung von Positions- und Zustandsdaten der Arbeitseinheit 1 ermittelbaren Daten lassen sich mittels der externe Datenverarbeitungseinheit analysieren, um den Betriebsprozess zu dokumentieren und zu optimieren. Darüber hinaus können mittels der von einem Managementsystem verarbeitbaren Daten betriebswirtschaftliche Abläufe automatisiert werden. So lassen sich spezifische Informationen der jeweiligen Arbeitseinheit, die sich aus den Zustandsdaten ableiten lassen, wie beispielsweise Tätigkeitsart, Maschinenkennung, Kraftstoffverbrauch und dergleichen mehr, darstellen.

**Bezugszeichenliste**

| | | | |
|---|---|---|---|
| 1 | Arbeitseinheit | 33 | Verfahrensschritt |
| 2 | Traktor | 34 | Verfahrensschritt |
| 3 | Ladewagen | 35 | Verfahrensschritt |
| 4 | Mobiles Datenverarbeitungsgerät | 36 | Verfahrensschritt |
| 5 | Sender | 37 | Verfahrensschritt |
| 6 | Mähdrescher | 38 | Verfahrensschritt |
| 7 | Bodenbearbeitungsgerät | 39 | Verfahrensschritt |
| 8 | Getreideschneidwerk | 40 | Verfahrensschritt |
| 9 | Satellitengestützes Ortungssystem | 41 | Verfahrensschritt |
| 10 | Hofstelle | 42 | Verfahrensschritt |
| 11 | Schlag | 43 | Verfahrensschritt |
| 12 | Prozessoreinheit | 44 | Verfahrensschritt |
| 13 | Speichereinheit | 45 | Verfahrensschritt |
| 14 | GPS-Empfänger | 46 | Verfahrensschritt |
| 15 | Bluetooth-Einheit | | |
| 16 | Anzeigeeinheit | | |
| | | | |
| 20 | Verfahrensschritt | | |
| 21 | Verfahrensschritt | | |
| 22 | Verfahrensschritt | | |
| 23 | Verfahrensschritt | | |
| 24 | Verfahrensschritt | | |
| 25 | Verfahrensschritt | | |
| 26 | Verfahrensschritt | | |
| 27 | Verfahrensschritt | | |
| 28 | Verfahrensschritt | | |
| 29 | Verfahrensschritt | | |
| 30 | Verfahrensschritt | | |
| 31 | Verfahrensschritt | | |
| 32 | Verfahrensschritt | | |

## Patentansprüche

1. Verfahren zur Zustandsakquisition zumindest einer landwirtschaftlichen Arbeitseinheit (1, 2, 3, 6, 7, 8) umfassend die Verfahrensschritte:
- Bereitstellen von Positionsdaten;
- Bereitstellen von Zustandsdaten der zumindest einen Arbeitseinheit (1, 2, 3, 6, 7, 8);
**dadurch gekennzeichnet, dass**
- die Zustandsdaten an ein mobiles Datenverarbeitungsgerät (4) übertragen werden, von welchem die Zustandsdaten während eines Aufzeichnungsmodus aufgezeichnet werden;
- wobei eine jeweilige Aktivierung des Aufzeichnungsmodus erfasst und im Kontext mit den während des Aufzeichnungsmodus bereitgestellten Positionsdaten und/oder Zustandsdaten gewertet wird; und
- die Wertung einem das mobile Datenverarbeitungsgerät (4) einer Bedienperson repräsentierenden Datensatz zugeordnet wird.

2. Verfahren nach Anspruch 1, **dadurch gekennzeichnet, dass** die Zustandswerte durch der zumindest einen Arbeitseinheit (1, 2, 3, 6, 7, 8) zugeordnete Mittel (5) automatisch erfasst oder mittels einer Eingabevorrichtung (16) manuell eingegeben werden.

3. Verfahren nach Anspruch 2, **dadurch gekennzeichnet, dass** der Aufzeichnungsmodus durch die manuelle Eingabe zumindest eines Zustandsdaten repräsentierenden Wertes aktiviert wird.

4. Verfahren nach einem der Ansprüche 1 bis 3, **dadurch gekennzeichnet, dass** in Abhängigkeit von den bereitgestellten Zustandsdaten eine erfolgte Aktivierung des Aufzeichnungsmodus unterschiedlich gewichtet und erfasst wird.

5. Verfahren nach einem der Ansprüche 1 bis 4, **dadurch gekennzeichnet, dass** nach einer erfolgten Aktivierung des Aufzeichnungsmodus bereitgestellte Zustandsdaten unterschiedlich gewichtet und erfasst werden.

6. Verfahren nach einem der Ansprüche 4 oder 5, **dadurch gekennzeichnet, dass** die Anzahl der erfassten Aktivierungen des Aufzeichnungsmodus und die Anzahl der nach der Aktivierung des Aufzeichnungsmodus erfassten gewichteten Zustandsdaten aufgezeichnet werden.

7. Verfahren nach Anspruch 6, **dadurch gekennzeichnet, dass** die aufgezeichnete Anzahl zur Bewertung von der Arbeitseinheit (1, 2, 3, 6, 7, 8) durchgeführter Betriebsprozesse verwendet wird.

8. Verfahren nach einem der Ansprüche 6 oder 7, **dadurch gekennzeichnet, dass** die erfasste Anzahl in einer Speichereinheit (13) des mobilen Datenverarbeitungsgerätes (4) abrufbar hinterlegt wird.

9. Verfahren nach einem der Ansprüche 1 bis 8, **dadurch gekennzeichnet, dass** die Zustandsdaten an eine externe Datenverarbeitungseinheit übertragen werden.

10. Computerprogramm mit Programmcode zur Durchführung aller Verfahrensschritte nach einem der Ansprüche 1 bis 9, wenn das Computerprogramm in einem mobilen Datenverarbeitungsgerät (4) ausgeführt wird.

11. System zur Zustandsakquisition zumindest einer landwirtschaftlichen Arbeitseinheit, umfassend
- eine Vorrichtung (14) zum Bereitstellen von Positionsdaten;
- Mittel (5) zum Bereitstellen von Zustandsdaten der zumindest einen Arbeitseinheit (1, 2, 3, 6, 7, 8);
**dadurch gekennzeichnet, dass**
- die Zustandsdaten an ein mobiles Datenverarbeitungsgerät (4) übertragbar sind, welches dazu eingerichtet ist, die Zustandsdaten während eines Aufzeichnungsmodus aufzuzeichnen;
- wobei das mobile Datenverarbeitungsgerät (4) dazu eingerichtet ist, eine jeweilige Aktivierung des Aufzeichnungsmodus zu erfassen und im Kontext mit den während des Aufzeichnungsmodus bereitgestellten Positionsdaten und/oder Zustandsdaten zu werten; und
- dass das mobile Datenverarbeitungsgerät (4) dazu eingerichtet ist, die Wertung einem das mobile Datenverarbeitungsgerät einer Bedienperson repräsentierenden Datensatz zuzuordnen.
